# EUROPÄISCHE PATENTSCHRIFT

(11) **EP 0 990 200 B1**
(45) Veröffentlichungstag und Bekanntmachung des Hinweises auf die Patenterteilung: **24.07.2002**
(21) Anmeldenummer: 98931907.4
(22) Anmeldetag: 09.04.1998
(51) Int. Cl.: G06F 1/00, H04L 29/06

(54) **VERFAHREN ZUR BERECHTIGUNGSÜBERPRÜFUNG UND ANORDNUNG ZUM DURCHFÜREN DIESES VERFAHRENS**
METHOD FOR VERIFYING AUTHORIZATION AND DEVICE FOR CARRYING OUT SAID METHOD
PROCEDE POUR LE CONTROLE D'AUTORISATION ET DISPOSITIF POUR LA MISE EN OEUVRE DE CE PROCEDE

(30) Priorität: 16.06.1997 DE 19725444
(43) Veröffentlichungstag der Anmeldung: 05.04.2000
(73) Patentinhaber: Infineon Technologies AG, 81669 München (DE)
(72) Erfinder: POCKRANDT, Wolfgang, D-85293 Reichertshausen (DE)
(74) Vertreter: Hermann, Uwe, Dipl.-Ing.
(86) Internationale Anmeldenummer: DE9801043
(87) Internationale Veröffentlichungsnummer: WO9858304

(56) Entgegenhaltungen:
- EP-A- 0 636 963
- DE-A- 4 328 781
- US-A- 4 885 778

## Beschreibung

Die Erfindung betrifft ein Verfahren zum Überprüfen, ob die Berechtigung bei zumindest zwei miteinander verbundenen Datenverarbeitungseinrichtungen vorliegt, miteinander Daten auszutauschen und eine Anordnung zum Durchführen dieses Verfahrens. Der Datenaustausch zwischen zwei oder mehr Datenverarbeitungsgeräten ist heutzutage ein üblicher Vorgang. Dabei gewinnt zunehmend die Frage an Bedeutung, ob die miteinander in Verbindung stehenden Datenverarbeitungsgeräte für den Austausch von Daten allgemein oder für den Austausch bestimmter Daten berechtigt sind. Eine derartige Überprüfung ist immer dann notwendig, wenn die in einer Datenverarbeitungseinrichtung zugänglichen Informationen bzw. Daten nur einem bestimmten Personenkreis bzw. den diesen Personenkreis zugeordneten Datenverarbeitungsgeräten zugänglich sein soll.

Üblicherweise erfolgt diese Überprüfung in der Form, daß geheime Kenn- bzw. Schlüsselworte ausgetauscht werden, die die Berechtigung erkennen lassen. Das Problem dieses üblichen Vefahrens ist daran zu sehen, daß bei der Überwachung der Datenübertragungsstrecke das Schlüsselwort bei seinem regelmäßigen Gebrauch ausgespäht werden kann. Weiterhin besteht die Gefahr, daß wenn das Schlüsselwort zumindest in einem der Datenverarbeitungsgeräte abgespeichert ist, dieses leicht ausgespäht werden kann. In beiden Fällen besteht die Gefahr der mißbräuchlichen Verwendung eines Schlüsselwortes und damit der unberechtigte Zugang zur Information.

Auf der DE 42 28 781 A1 ist eine Anordnung zweier Informationsquellen beziehungsweise Informationssenken geschrieben, die sich gegenseitig authentifizieren. Hierzu wird gesteuert durch ein über Funk übertragenes Zeitzeichensignal jeweilige Authentifizierungsdaten erzeugt, die ausgetauscht und jeweils überprüft werden.

Aus der EP 636 963 A2 ist ein Authentifizierungssystem beschrieben, das ein Einmalpassword verwendet. Dabei wird bei einem Benutzer ein zeitabhängiges Password erzeugt. Aus diesem zeitabhängig gebildeten Password wird ein zeitabhängiger Wert rückgewonnen und mit einem lokal gebildeten zeitabhängigem Wert verglichen. Die Autentität liegt dann vor, wenn der rückgewonnene zeitabhängige Wert mit dem lokal gebildeten zeitabhängigem Wert übereinstimmt.

Aus der US 4,885,778 ist ein System zumindest von zwei Computern bekannt, die jeweils einen eigenen Takt erzeugen. Des weiteren ist eine Vorrichtung vorgesehen, die die jeweiligen Taktgeber synchronisieren.

Der Erfindung liegt somit die Aufgabe zugrunde, ein Verfahren bzw. eine Anordnung zur Verwendung dieses Verfahrens vorzusehen, bei dem die Ermittlung des Schlüsselwortes in erhöhtem Maße erschwert ist.

Diese Aufgabe wird erfindungsgemäß mit den im Patentanspruch 1 und 8 angegebenen Maßnahmen gelöst.
Dadurch, daß in den Datenverarbeitungseinrichtungen, die für einen Datenaustausch vorgesehen sind, Überprüfungsdaten nicht fest abgespeichert, sondern vor dem Datenaustausch jeweils neu erzeugt werden, ist es nicht möglich, ein fest abgespeichertes Schlüsselwort auszuspähen. Dadurch, daß es weiterhin möglich ist, vor jeder Datenübertragung andere Überprüfungsdaten zu erzeugen, ist auch die Ermittlung der Überprüfungsdaten bei der Überwachung der Datenübertragungsstrecke in erhöhtem Maße erschwert.

Weitere vorteilhafte Ausgestaltungen der Erfindung sind in den untergeordneten Ansprüchen angegeben. Dadurch das vorgesehen ist, daß ein Auslösesignal den für die Datenübertragung vorgesehenen Datenverarbeitungseinrichtungen gleichzeitig zugeführt wird, besteht die Möglichkeit, daß entweder derjenige, der das Auslösesignal zuerst empfängt oder die Überprüfungsdaten zuerst erzeugt hat oder daß nach einem anderen Auswahlschema bestimmt ist, wer die Überprüfungsdaten zur Überprüfung überträgt und wer sie empfängt, ist nicht direkt vorhersehbar, zu welchem Zeitpunkt die Überprüfungsdaten von welcher Datenverarbeitungseinrichtung an welche Datenverarbeitungseinrichtung übertragen werden. Weiterhin besteht die Möglichkeit, das Ausspähen der Überprüfungsdaten durch Verschlüsselung zu erschweren. In jedem Fall ist vorgesehen, daß in einer der Datenverarbeitungseinrichtungen die Überprüfungsdaten miteinander verglichen werden und in Abhängigkeit vom Überprüfungsergebnis entschieden wird, ob ein Datenaustausch zulässig ist oder nicht.

Nachfolgend wird die Erfindung unter Bezugnahme auf die Zeichnung anhand von Ausführungsbeispielen näher erläutert.
- Figur 1: zeigt eine Prinzipdarstellung, in der der grundsätzliche Aufbau der erfindungsgemäßen Anordnung dargestellt ist,
- Figur 2 bis 4: zeigt ein detailliertes Ausführungsbeispiel mit mehreren Ausführungsvarianten, und
- Figur 5: zeigt ein zweites erfindungsgemäßes Ausführungsbeispiel.

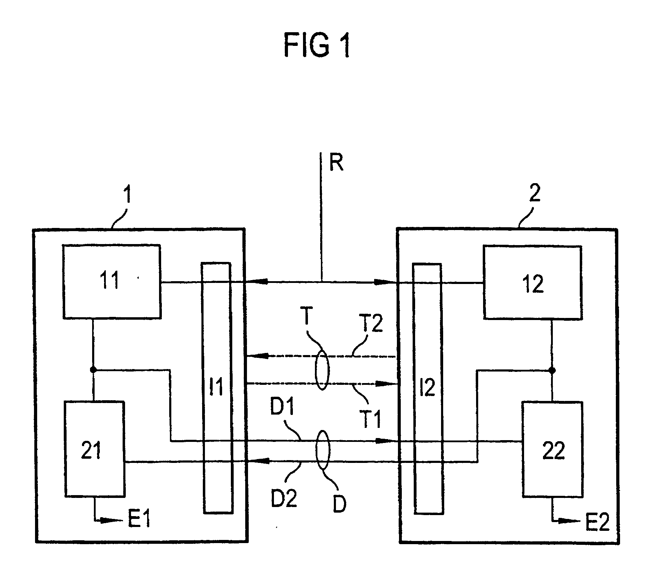

Anhand von Figur 1 wird zunächst das Grundprinzip des erfindungsgemäßen Verfahrens bzw. der Grundaufbau der erfindungsgemäßen Anordnung erläutert.

Mit dem Bezugszeichen 1 und 2 sind zwei Datenverarbeitungseinrichtungen dargestellt, die einen funktionell entsprechenden Aufbau aufweisen. Jede der beiden Datenverarbeitungseinrichtungen 1 und 2 verfügt über eine Schnittstellen- bzw. Interface-Anordnung I1, I2, über die Daten bzw. Informationen empfangen und/oder abgegeben werden. Weiterhin ist ein Datengenerator 11, 12 vorgesehen, in dem Überprüfungsdaten erzeugt werden. Schließlich ist eine Vergleichseinrichtung 21, 22 vorgesehen, die die Überprüfungsdaten vergleicht.

Ein Auslöse- bzw. Initialisierungssignal R wird im vorliegenden Ausführungsbeispiel beiden Datenverarbeitungseinrichtungen 1, 2 zugeführt. Auf dieses Auslösesignal R hin, das über die Schnittstellenanordnung I1 dem Datengenerator 11 zugeführt wird, erzeugt dieser Überprüfungsdaten. Da das Auslösesignal R gleichzeitig über die Schnittstellenanordnung I2 dem Datengenerator 12 in der Datenverarbeitungseinrichtung 2 zugeführt wird, erzeugt dieser gleichzeitig zum Datengenerator 11 in der Datenverarbeitungseinrichtung 1 Überprüfungsdaten. Die Überprüfungsdaten, die vom Datengenerator in der Datenverarbeitungseinrichtung 1 erzeugt werden, werden über die Schnittstellenanordnung I1 als Überprüfungsdaten D1 zur Datenverarbeitungseinrichtung 2 hin übertragen, wo sie in der Vergleichseinrichtung 22 mit den von dem Datengenerator 12 erzeugten Überprüfungsdaten verglichen werden. Die Vergleichseinrichtung 22 gibt auf das Vergleichsergebnis hin ein Ausgangssignal E2 aus, das dafür signifikant ist, ob der Datenaustausch mit der Datenverarbeitungseinrichtung 1 zulässig ist. Gleichzeitig werden die in der Datenverarbeitungseinrichtung 2 erzeugten Überprüfungsdaten zur Datenverarbeitungseinrichtung 1 übertragen, wo sie über die Schnittstellenanordnung I1 als Überprüfungsdaten D2 empfangen und der Vergleichseinrichtung 21 zugeführt werden. In der Vergleichseinrichtung 21 werden entsprechend zur Vergleichseinrichtung 22 die Überprüfungsdaten, die in dem Datengenerator 11 erzeugt sind, mit den Überprüfungsdaten D2 verglichen. Entsprechend dem Vergleichsergebnis wird ein Signal E1 von der Vergleichseinrichtung 21 erzeugt, das signifikant dafür ist, ob der Datenaustausch zulässig ist oder nicht.

Obwohl in diesem Ausführungsbeispiel nach Figur 1 der Aufbau der beiden Datenverarbeitungseinrichtungen 1 und 2 funktionell entsprechend ist, ist nicht zwangsweise ein identischer paralleler Ablauf notwendig. Es kann beispielsweise vorgesehen sein, daß derjenige, der das Auslösesignal R als erstes empfängt die Überprüfungsdaten stets der anderen Datenverarbeitungseinrichtung zum Vergleich überträgt. Gleichfalls kann vorgesehen sein, daß in der Datenverarbeitungseinrichtung, die das Auslösesignal R zuerst empfangen hat, der Vergleich der Überprüfungsdaten erfolgt. Genausogut ist es möglich, daß dieses Auswahlkriterium darauf angewendet wird, welche Datenverarbeitungseinrichtung die Überprüfungsdaten zuerst erzeugt oder aber zuerst empfangen hat. Schließlich ist es möglich, daß eine der beiden Datenverarbeitungseinrichtungen für den Vergleich der Überprüfungsdaten fest vorgesehen ist. In diesem Fall braucht die Übertragungsstrecke D für die Übermittlung der Überprüfungsdaten nicht bidirektional sondern nur für die Übertragung der Überprüfungsdaten in einer Richtung ausgebildet sein. Schließlich ist jedoch noch denkbar, daß nach einem bestimmten Wechselschema die Überprüfungsdaten entweder von der Vergleichseinrichtung 21 oder der Vergleichseinrichtung 22 verglichen werden.

In allen Fällen ist es vorteilhaft, eine Taktübertragungsstrecke T vorzusehen, über die von der Datenverarbeitungseinrichtung 1 ein Taktsignal T1 zur Datenverarbeitungseinrichtung 2 und/oder ein Taktsignal von der Datenverarbeitungseinrichtung 2 zur Datenverarbeitungseinrichtung 1 übermittelt wird.

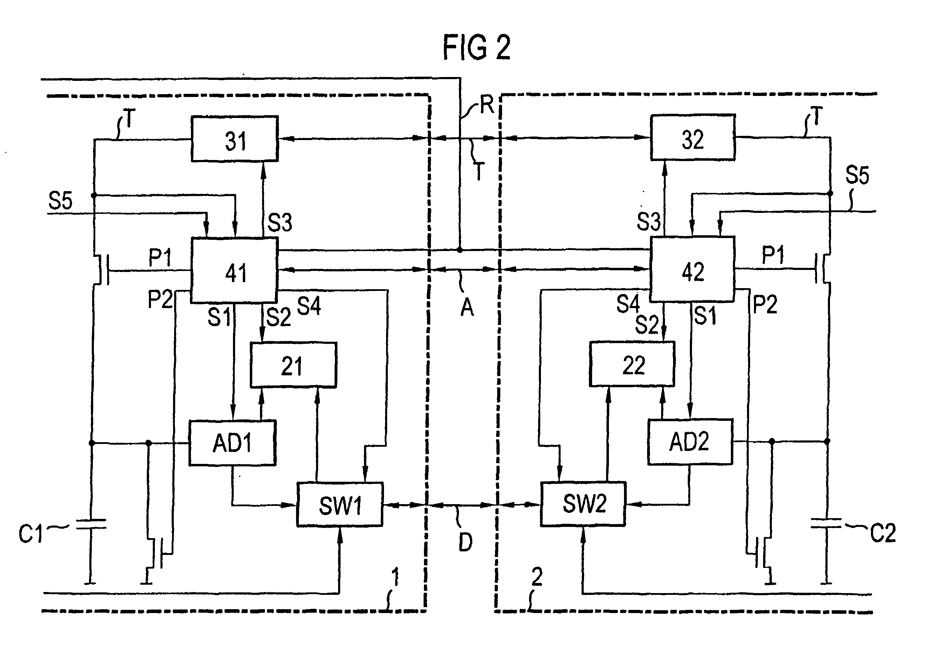

In Figur 2 ist die in Figur 1 dargestellte grundsätzliche Anordnung mit weiteren Details dargestellt. Es ist wiederum eine Datenverarbeitungseinrichtung 1 und eine Datenverarbeitungseinrichtung 2 vorgesehen. Diesen wird ein Auslösesignal R zugeführt.

Auch bei diesem Ausführungsbeispiel sind wiederum die Anordnungen in beiden Datenverarbeitungseinrichtungen 1, 2 funktionell entsprechend. Nach dem Zuführen des Auslösesignals R erhält beispielsweise die Datenverarbeitungseinrichtung 1 eine Steuerfunktion und liefert einen Takt T, der vom Taktgenerator 31 erzeugt wird. Vom Takt gesteuert läuft in beiden Aktivierungslogikanordnungen 41, 42 der beiden Datenverarbeitungseinrichtungen 1, 2 synchron ein zyklisches Programm ab, wodurch in beiden Datenverarbeitungseinrichtungen 1, 2 Signale P1, P2 und S3 erzeugt werden. Mit dem Signal S3 wird in der Datenverarbeitungseinrichtung 1 die Taktfrequenz des Taktgenerators 31 gesteuert. Weiterhin steuern die Signale P1 und P2 zusammen mit dem Taktsignal T den Ladezustand eines Kondensators C1. Neben der festen Vorgabe, daß die Datenverarbeitungseinrichtung 1 die Steuerfunktion aufweist, kann diese Zuordnung dadurch erfolgen, daß ein Steuersignal S5 der Aktivierungslogikanordnung 41, 42 in beiden Datenverarbeitungseinrichtungen 1, 2 jweils zugeführt Wird. Dabei erfolgt die Festlegung wie sie beispielsweise unter Bezugnahme auf Figur 1 erläutert wurde. Optional ist für diese Festlegung zusätzlich eine Übertragung eines Aktivierungssignales A vorgesehen, mit dem eine der beiden Datenverarbeitungseinrichtungen 1, 2 der jeweils anderen mitteilt, daß sie die Steuerfunktion übernommen hat. In jedem Fall sind geeignete Vorkehrungen getroffen, die verhindern, daß beide Datenverarbeitungseinrichtungen 1, 2 gleichzeitig die Steuerfunktion übernehmen, was zwangsweise zu Fehlfunktionen führen würde.

Wie zuvor angegeben soll festgelegt sein, daß die Datenverarbeitungsrichtung 1 die Steuerfunktion übernommen hat. Um nunmehr das leichte Erkennen der Überprüfungsdaten zu verhindern, werden von der Datenverarbeitungseinrichtung 2 Zufallsdaten als Übertragungsdaten D an die Datenverarbeitungseinrichtung 1 übertragen. Währenddessen wird der Kondensator C1, C2 in beiden Datenverarbeitungseinrichtungen 1, 2 gleichzeitig aufgeladen und zu einem bestimmten Zeitpunkt abgefragt. Wobei der Abfragezeitpunkt entweder fest vorgegeben ist, in Abhängigkeit von der Taktfrequenz läuft, oder aber mittels Übertragung des Aktivierungssignales A von einem der beiden Datenverarbeitungseinrichtungen 1, 2 festgelegt wird. Gesteuert vom Signal S4 wird nunmehr der Spannungswert des Kondensators C1, C2 über A/D-Wandler AD1, AD2 in einen digitalen Zahlenwert umgesetzt. Dabei führt der A/D-Wandler AD1 den digitalisierten Spannungswert des Kondensators C1 der Vergleichseinrichtung 21 zu, während der digitalisierte Spannungswert des Kondensators C2 vom A/D-Wandler AD2 über einen Umschalter SW2 der Datenverarbeitungseinrichtung 2 zur Datenverarbeitungseinrichtung 1 übertragen wird. Hier werden die als Überprüfungsdaten empfangenen Übertragungsdaten D über eine Schalteinrichtung SW1 der Vergleichseinrichtung 21 zugeführt. Diese Vergleichseinrichtung 21 überprüft die beiden Überprüfungsdaten und stellt fest, ob eine Berechtigung zum weiteren Datenaustausch vorliegt. Die Berechtigung muß nicht zwangsweise von der Gleichheit bzw. Identität der verglichenen Überprüfungsdaten abhängen. Es ist auch jeder funktionale Zusammenhang zwischen den Überprüfungsdaten denkbar. Sinnvoll sind jedoch nur Zusammenhänge, die eine eindeutige Aussage zulassen.

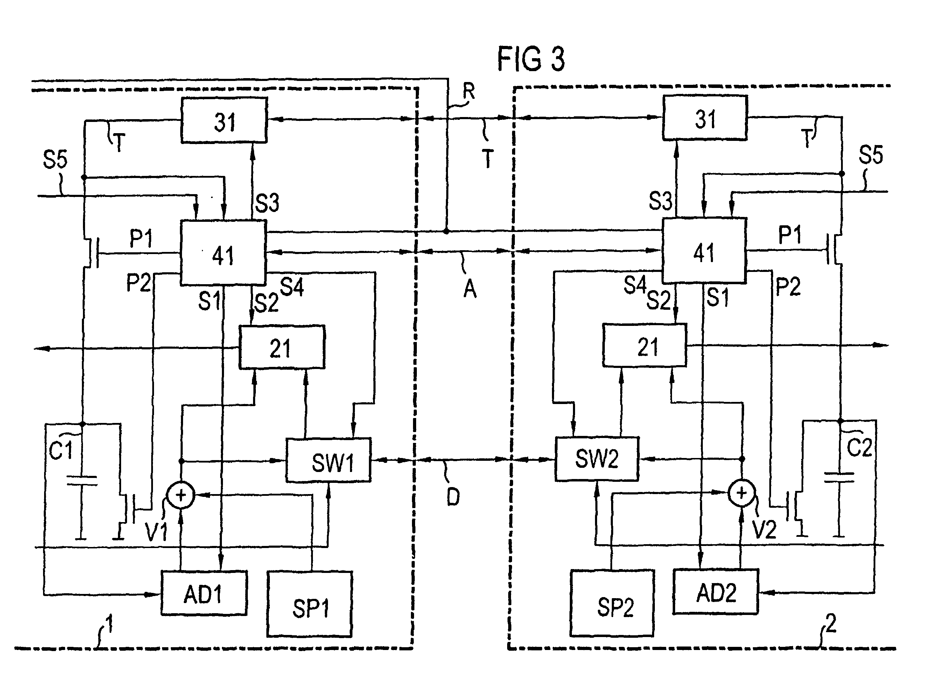

In Figur 3 ist eine weitere Ausgestaltung des vorangegangenen Ausführungsbeispiels dargestellt, wobei gleiche Elemente mit gleichen Bezugszeichen versehen sind. Der wesentliche Unterschied zur in Figur 2 dargestellten Anordnung liegt darin, daß der vom Kondensator C1, C2 im A/D-Wandler AD1, AD2 umgesetzte Spannungswert in einer Verknüpfungseinrichtung V1, V2 mit einem Codewort aus einem Codewortspeicher SP1, SP2 verknüpft wird, um es dann einer der Vergleichseinrichtung 21, 22 zuzuführen.

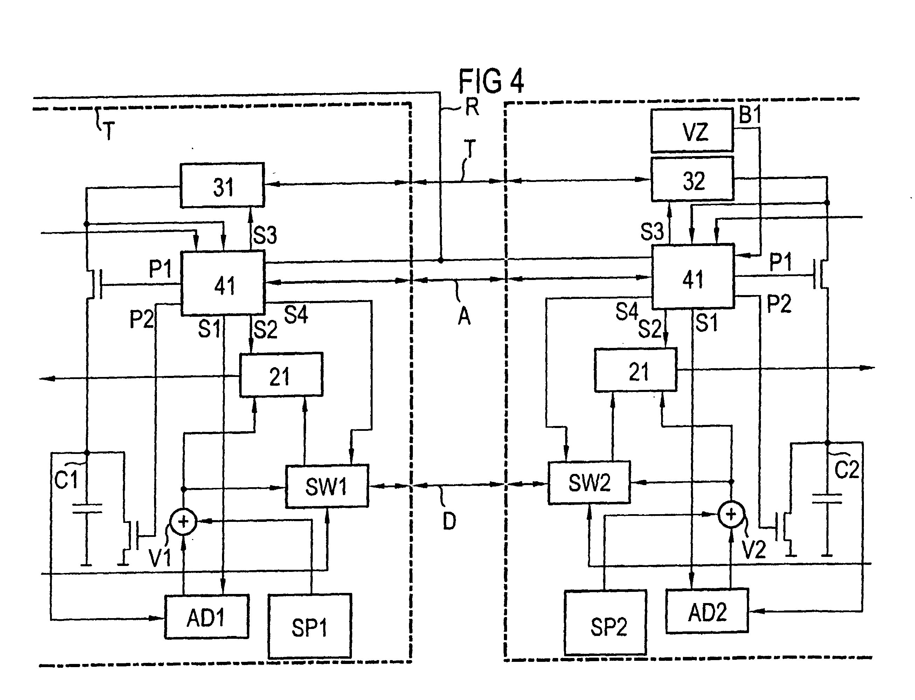

Die in Figur 4 dargestellte Ausgestaltung unterscheidet sich von der in Figur 3 dargestellten Ausgestaltung dadurch, daß in der Datenverarbeitungseinrichtung 2 ein Versuchszähler VZ vorgesehen ist, der die Anzahl der Versuche zählt, um die Zulässigkeit zum Datenaustausch zu erzielen. Ist dabei eine vorgegebene Anzahl überschritten, wird die Aktivierungslogik 42 über ein Steuersignal P1 gesperrt. Dieser Versuchszähler VZ kann nur mittels eines erfolgreichen Versuches zurückgesetzt werden.

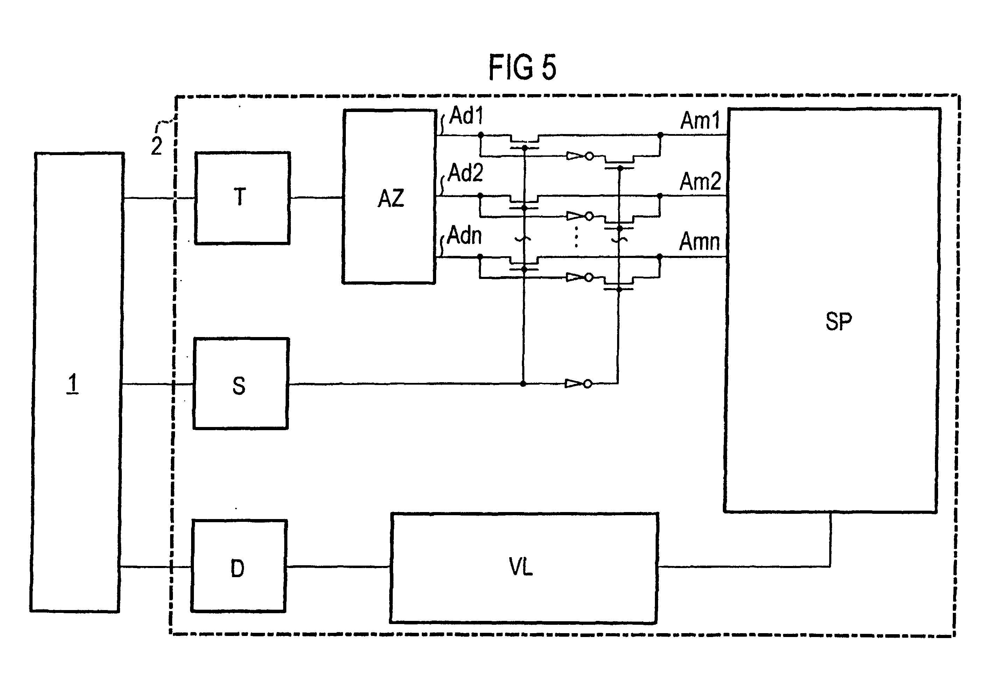

Bei dem in Figur 5 dargestellten Ausführungsbeispiel ist ein weiteres Beispiel für die Erzeugung der Überprüfungsdaten dargestellt. Auch bei diesem Ausführungsbeispiel sind zwei Datenverarbeitungseinrichtungen 1, 2 mit identischem Aufbau vorgesehen. Nach einer der zuvor erläuterten Möglichkeiten soll nunmehr festgelegt sein, daß die Datenverarbeitungseinrichtung 1 die Steuerfunktion aufweist. Hierbei ist ein Schlüsselwort in einem Schlüsselwortspeicher SP abgespeichert. Das Schlüsselwort erstreckt sich über eine vorgegebene Anzahl von n Speicherbereichen, die über Adreßleitungen Am1, Am2 bis AmMN angesprochen und an eine Vergleichs- bzw. Rechenlogik VL ausgelesen werden. Hier wird das Segment des Schlüsselwortes oder mehrerer zu einem neuen Schlüsselwort zusammengesetzte Segmente zur Datenverarbeitungseinrichtung 1 weitergeleitet, wobei in der Vergleichs- bzw. Rechenlogik VL eine Kodierung der so erzeugten Überprüfungsdaten erfolgen kann. In der Datenverarbeitungseinrichtung 1 erfolgt sodann in der entsprechenden Vergleichs- bzw. Rechenlogik der Vergleich mit den entsprechend erzeugten Überprüfungsdaten.

Wie in Figur 5 dargestellt ist, erfolgt die Ansteuerung der Adreßleitungen Am1 bis Amn in der Weise, daß durch Übertragung eines Taktes T ein Adreßzähler betrieben wird, der an Ausgängen Ad1 bis Adn eine Adresse angibt, die wiederum über ein zugeführtes Steuersignal S der dargestellten Auswählschaltung die Adresse des Adreßzählers manipuliert.

Die dargestellte Manipulierungsschaltung ist beliebig änderbar, wobei die Adresse durch eine beliebig geartete Logikschaltung manipulierbar ist. Weiterhin ist vorteilhafterweise das Steuersignals in der Datenverarbeitungseinrichtung 1 von einem Zufallsgenerator erzeugt.

Abschließend sei noch darauf hingewiesen, daß das Ausführungsbeispiel nach Figur 5 in jeder durchführbaren Form mit dem Ausführungsbeispiel nach Figur 2 bis 4 und 1 kombinierbar ist. Auch ist vorgesehen, daß das Auslösesignal von einer der Datenverarbeitungseinrichtungen 1, 2 ausgegeben wird und daß die Steuerfunktion von einer der Datenverarbeitungseinrichtungen auf die jeweils andere überwechseln kann.

## Patentansprüche

1. Verfahren zum Überprüfen, ob die Berechtigung bei zumindest zwei miteinander verbundenen Datenverarbeitungseinrichtungen (1, 2) vorliegt, miteinander Daten auszutauschen, wobei
- auf ein Auslösesignal hin in jeder der zwei Datenverarbeitungseinrichtungen (1, 2) Überprüfungsdaten erzeugt werden,
- zu einer der zumindest zwei Datenverarbeitungseinrichtungen (1, 2) die Überprüfungsdaten von der zumindest einen anderen Datenverarbeitungseinrichtung übertragen werden,
- in der einen Datenverarbeitungseinrichtung die in dieser Datenverarbeitungseinrichtung erzeugten Überprüfungsdaten mit den zu dieser Datenverarbeitungseinrichtung übertragenen Überprüfungsdaten verglichen werden, und
- auf der Grundlage des Vergleichs der Überprüfungsdaten entschieden wird, ob eine Berechtigung zum Datenaustausch zwischen den zumindest zwei Datenverarbeitungseinrichtungen besteht,
**dadurch gekennzeichnet,**
**daß** eine der zwei Datenverarbeitungseinrichtungen einen gemeinsamen Takt für die zwei Datenverarbeitungseinrichtungen vorgibt.

2. Verfahren nach Anspruch 1, wobei das Auslösesignal den zumindest zwei Datenverarbeitungseinrichtungen (1, 2)gleichzeitig zugeführt wird.

3. Verfahren nach Anspruch 1 oder 2, wobei einer der zumindest zwei Datenverarbeitungseinrichtungen (1, 2)das Auslösesignal zuerst empfängt.

4. Verfahren nach einem der Ansprüche 1 bis 3, wobei vorbestimmt wird, in welcher der zumindest zwei Datenverarbeitungseinrichtungen (1, 2)der Vergleich der Überprüfungsdaten erfolgt.

5. Verfahren nach einem der vorhergehenden Ansprüche, wobei das Bestimmen, in welcher der zumindest zwei Datenverarbeitungseinrichtungen (1, 2)der Vergleich der Überprüfungsdaten erfolgt, in Abhängigkeit davon erfolgt, in welcher der zumindest zwei Datenverarbeitungseinrichtungen (1, 2)die Überprüfungsdaten zuerst erzeugt werden.

6. Verfahren nach einem der vorhergehenden Ansprüche, wobei die Überprüfungsdaten verschlüsselt übertragen werden.

7. Verfahren nach Anspruch 6, wobei die verschlüsselten Überprüfungsdaten verglichen werden.

8. Anordnung zum Durchführen des Verfahrens nach Anspruch 1, mit zumindest zwei Datenverarbeitungseinrichtungen (1, 2)und einer Einrichtung zum Zuführen eines Auslösesignals, wobei alle Datenverarbeitungseinrichtungen (1, 2)einen Datengenerator (11, 12), der auf das zugeführte Auslösesignal hin Überprüfungsdaten erzeugt, und eine Interface-Einrichtung (I1, I2) aufweisen, um Daten zu empfangen und abzugeben, und wobei wenigstens eine der zumindest zwei Datenverarbeitungseinrichtungen (1, 2)eine Vergleichseinrichtung (21; 22) aufweist, um die erzeugten Überprüfungsdaten mit den über die Interface-Einrichtungen (I1, I2) empfangenen Überprüfungsdaten des anderen der zumindest zwei Datenverarbeitungseinrichtungen (1, 2)zu vergleichen und um ein Vergleichssignal abzugeben.

## Claims

1. Method for checking whether authorization exists for at least two data processing devices (1, 2) which are connected to one another to interchange data with one another,
- checking data being produced, in response to a trigger signal, in each of the two data processing devices (1, 2),
- the checking data being transmitted to one of the at least two data processing devices (1, 2) from the at least one other data processing device,
- in the one data processing device, the checking data produced in this data processing device being compared with the checking data transmitted to this data processing device, and
- the comparison of the checking data being used as the basis to decide whether authorization exists for data interchange between the at least two data processing devices,
**characterized**
**in that** one of the two data processing devices determines a common clock for the two data processing devices.

2. Method according to Claim 1, the trigger signal being supplied simultaneously to the at least two data processing devices (1, 2).

3. Method according to Claim 1 or 2, one of the at least two data processing devices (1, 2) receiving the trigger signal first.

4. Method according to one of Claims 1 to 3, an advance determination being made as to which of the at least two data processing devices (1, 2) carries out the comparison of the checking data.

5. Method according to one of the preceding claims, the determination as to which of the at least two data processing devices (1, 2) carries out the comparison of the checking data being made on the basis of which of the at least two data processing devices (1, 2) produces the checking data first.

6. Method according to one of the preceding claims, the checking data being transmitted in encrypted form.

7. Method according to Claim 6, the encrypted checking data being compared.

8. Arrangement for carrying out the method according to Claim 1, having at least two data processing devices (1, 2) and a device for supplying a trigger signal, all the data processing devices (1, 2) having a data generator (11, 12) (which produces checking data in response to the supplied trigger signal) and an interface device (I1, I2) in order to receive and to emit data, and at least one of the at least two data processing devices (1, 2) having a comparison device (21; 22) in order to compare the produced checking data with the checking data (received via the interface devices (I1, I2)) of the other of the at least two data processing devices (1, 2), and in order to emit a comparison signal.

## Revendications

1. Procédé permettant de contrôler si l'autorisation d'échanger entre eux des données pour au moins deux systèmes (1, 2) informatiques reliés entre eux existe, dans lequel
- sur un signal de déclenchement, on produit, dans chacun des deux systèmes (1, 2) informatiques, des données de contrôle,
- on transmet à l'un des au moins deux systèmes (1, 2) informatiques, les données de contrôle du au moins un autre système informatique,
- on compare, dans le un système informatique, les données de contrôle produites dans ce système informatique aux données de contrôle transmises à ce système informatique, et
- sur la base de la comparaison des données de contrôle, on décide qu'il y a une autorisation d'échange de données entre les au moins deux systèmes informatiques,
**caractérisé en ce que** l'un des deux systèmes informatiques prescrit une cadence commune pour les deux systèmes informatiques.

2. Procédé suivant la revendication 1, dans lequel on envoie le signal de déclenchement simultanément aux au moins deux systèmes (1, 2) informatiques.

3. Procédé suivant la revendication 1 ou 2, dans lequel le signal de déclenchement est reçu d'abord par l'un des au moins deux systèmes (1, 2) informatiques.

4. Procédé suivant l'une des revendications 1 à 3, dans lequel on détermine à l'avance celui des au moins deux systèmes (1, 2) informatiques dans lequel s'effectue la comparaison des données de contrôle.

5. Procédé suivant l'une des revendications précédentes, dans lequel on effectue la détermination de celui des au moins deux systèmes (1, 2) informatiques dans lequel s'effectue la comparaison des données de contrôle en fonction de celui des au moins deux systèmes (1, 2) informatiques dans lequel les données de contrôle sont produites d'abord.

6. Procédé suivant l'une des revendications précédentes, dans lequel les données de contrôle sont transmises d'une manière chiffrée.

7. Procédé suivant la revendication 6, dans lequel on compare les données de contrôle chiffrées.

8. Dispositif pour la mise en oeuvre du procédé suivant la revendication 1, comprenant au moins deux systèmes (1, 2) informatiques et un dispositif d'envoi d'un signal de déclenchement, tous les systèmes (1, 2) informatiques ayant un générateur (11, 12) de données qui produit, lorsque le signal de déclenchement est envoyé, des données de contrôle, et un dispositif (I1, I2) d'interface pour recevoir et émettre des données, et au moins l'un des au moins deux systèmes (1, 2) informatiques comprend un dispositif (21, 22) de comparaison pour comparer les données de contrôle reçues par les dispositifs (I1,I2) d'interface de l'autre des au moins deux systèmes (1, 2) informatiques et pour émettre un signal de comparaison.
